# FASCICULE DE BREVET EUROPEEN

(11) **EP 3 293 111 B1**
(45) Date de publication et mention de la délivrance du brevet: **23.01.2019**
(21) Numéro de dépôt: 17186975.3
(22) Date de dépôt: 18.08.2017
(51) Int. Cl.: B64C 27/14

(54) **SYSTEME MECANIQUE DE TRANSMISSION D'UN MOUVEMENT ET AERONEF EQUIPE D'UN SYSTEME CORRESPONDANT**
MECHANISCHES SYSTEM ZUR ÜBERTRAGUNG EINER BEWEGUNG, UND MIT EINEM SOLCHEN SYSTEM AUSGESTATTETES LUFTFAHRZEUG
A MECHANICAL MOTION TRANSMISSION SYSTEM AND AN AIRCRAFT FITTED WITH A CORRESPONDING SYSTEM

(30) Priorité: 09.09.2016 FR 1601332
(43) Date de publication de la demande: 14.03.2018
(73) Titulaire: Airbus Helicopters, 13725 Marignane Cedex (FR)
(72) Inventeur: DE MEERSCHMAN, Olivier, 13410 LAMBESC (FR)
(74) Mandataire: GPI & Associés

(56) Documents cités:
- EP-A1- 3 144 222
- FR-A1- 2 871 138
- US-A1- 2007 125 907

## Description

La présente invention se rapporte au domaine des moyens de transmission d'un mouvement de rotation entre au moins deux organes. L'invention vise plus particulièrement des mécanismes pour mettre sélectivement en relation un arbre tournant avec une ou alternativement plusieurs sources motrices. Elle a pour objet un tel mécanisme de transmission pour entraîner simultanément des accessoires, tel qu'un alternateur et/ou un compresseur, à partir d'au moins un moteur permettant l'entraînement en rotation d'une roue d'entrée, et notamment un arbre d'entraînement d'un rotor d'un giravion, sélectivement isolément ou conjointement.

On rappelle que dans le domaine des giravions, hélicoptères notamment ou analogues, il est commun d'entraîner le rotor au moyen de plusieurs moteurs, et plus particulièrement au moyen de deux moteurs notamment. On rappelle aussi que l'un au moins de ces moteurs est en outre mis à profit pour motoriser des accessoires du giravion, tels qu'un alternateur ou un compresseur par exemple. On notera à ce stade de la description que le nombre et la nature de ces accessoires ne sont pas limitatifs quant à la portée de la présente invention.

Un problème général posé réside dans la double destination des moteurs du giravion, à la fois pour l'entraînement du rotor et, pour l'un d'eux au moins, pour la motorisation des accessoires. Ce problème est rendu d'autant plus délicat à résoudre qu'il est commun d'entraîner les accessoires indépendamment du rotor pendant que le giravion est au sol, en phase préparatoire au vol ou en phase d'attente notamment. A cet effet, il est habituel d'affecter l'un des moteurs à l'entraînement des accessoires agencés dans un boîtier accessoire alors que la transmission d'un mouvement de rotation entre le rotor et l'ensemble des moteurs est rompue.

Plus précisément, le moteur affecté à la motorisation des accessoires est d'une part en relation avec un arbre principal d'entraînement du rotor par l'intermédiaire d'un organe d'entraînement sélectif, tel que mécanisme de crabotage ou analogue, et d'autre part en relation avec un arbre secondaire d'entraînement des accessoires. Ces dispositions sont telles qu'à partir de la manoeuvre de l'organe d'entraînement sélectif, l'organe de motorisation des accessoires puisse alternativement soit entraîner les accessoires seulement, soit entraîner conjointement ces derniers avec le rotor.

Notamment lors d'une phase de préparation du giravion, préalablement à une mise en rotation du rotor, la liaison entre l'organe de motorisation des accessoires et l'arbre principal est rompue, seuls les accessoires étant entraînés par ce moteur. Puis, cette phase de préparation étant achevée, la liaison entre l'organe de motorisation des accessoires et le rotor est établie par l'intermédiaire de l'organe d'entraînement sélectif. Notamment encore, lors d'une phase d'attente du giravion pendant laquelle un entraînement du rotor est momentanément interrompu, l'organe d'entraînement sélectif est manoeuvré pour rompre la liaison entre l'arbre principal et l'organe affecté à la motorisation des accessoires, l'entraînement de ces derniers perdurant néanmoins.

On connaît par exemple le brevet FR 2 140 107 qui dévoile un dispositif comportant un grand nombre de pièces et se révèle complexe, encombrant et relativement fragile.

On relèvera à ce stade de la description qu'il est en outre commun d'interposer entre les moteurs et les arbres principaux d'entraînement du rotor qui leur sont affectés, des mécanismes à différentiel de rotation, roues libres notamment ou analogues. Ces roues libres, rendues d'autant plus indispensables que le rotor présente une inertie conséquente, visent à rendre sans conséquence une différence de vitesse de rotation relative entre le rotor et l'un ou l'autre des arbres principaux d'entraînement de celui-ci en relation avec le moteur correspondant. Cependant, il est courant de manoeuvrer axialement l'organe d'entraînement sélectif interposé entre l'arbre principal d'entraînement du rotor et l'organe de motorisation des accessoires, et une telle manoeuvre est rendue difficile, voire impossible, au delà d'un seuil admis de différence de vitesses de rotation entre le rotor et le moteur affecté à la motorisation des accessoires.

Pour surmonter cette difficulté, il est commun lors du passage de la position d'entraînement des accessoires seuls à la position d'entraînement conjoint de ces derniers avec le rotor, d'attendre l'atteinte de ce seuil de différence de vitesses pour manoeuvrer l'organe d'entraînement sélectif et provoquer l'entraînement du rotor à partir de l'ensemble des moteurs. Inversement, lorsque le rotor est entraîné par l'ensemble des moteurs, la manoeuvre axiale de l'organe d'entraînement sélectif est provoquée, puis seul l'organe de motorisation des accessoires est maintenu en fonctionnement. La manoeuvre de l'organe d'entraînement sélectif étant rendue délicate en raison de la différence de rotation entre les différents moteurs, notamment entre la position d'entraînement des accessoires seuls et la position d'entraînement de ces derniers conjointement avec le rotor, il est communément admis d'avoir à interrompre momentanément l'entraînement des accessoires, jusqu'à l'obtention d'une harmonisation suffisante des vitesses d'entraînement des différents organes tournants les unes par rapport aux autres.

Il est apparu à l'usage qu'une telle organisation générale du mécanisme de transmission n'est pas pleinement satisfaisante, notamment en raison du risque d'une perte de fonctionnement des accessoires lors de la phase d'attente de l'harmonisation susvisée des vitesses entre-elles, et/ou en cas de panne de l'un quelconque des moteurs. En effet, une rupture, même momentanée, de l'entraînement des accessoires, est préjudiciable lorsque parmi ceux-ci sont notamment compris un alternateur d'alimentation en énergie d'organes à mémoire, avec pour conséquence un risque d'une perte d'informations, ou un climatiseur. Cependant, et notamment au regard de l'inconvénient que présenterait un surcroît de masse indésirable, la pratique dans le domaine tend à négliger ce défaut de satisfaction.

Cette pratique est d'autant plus admise que les contraintes de fonctionnement de ces accessoires, et notamment de l'alternateur, imposent des seuils minimum et maximum de vitesses d'entraînement de ces derniers qui tendent à accroître la complexité de la structure du mécanisme de transmission, et à rendre rédhibitoire une organisation de cette structure permettant de garantir dans quelques situations que ce soient le maintien de l'entraînement des accessoires.

En outre, tel que décrit dans le document FR 2 871 138, il est également connu une solution relative au maintien de la motorisation des accessoires d'un giravion, y compris entre les phases de motorisation des accessoires par le moteur seul qui leur est affecté et/ou conjointement avec le rotor. Cette solution permet un fonctionnement habituel sélectif d'entraînement de ces accessoires par les moteurs, et plus particulièrement sélectivement isolément par l'organe de motorisation affecté aux accessoires ou conjointement par l'ensemble des organes moteurs d'entraînement du rotor.

Cependant, si un tel mécanisme autorise les manoeuvres d'entraînement sélectif des accessoires, sans être soumis à la contrainte d'avoir à interrompre le fonctionnement des moteurs d'entraînement du rotor, l'organe de motorisation affecté aux accessoires en mode vol de l'aéronef comporte des arbres de transmission agencés coaxialement avec un axe de rotation d'une roue d'entrée. Un tel agencement n'est alors pas compatible avec tous les aéronefs qui peuvent être équipés d'arbres supplémentaires de transmission d'un mouvement de rotation à des rotors supplémentaires, de propulsion notamment ou de commande du mouvement en lacet du giravion.

En outre, il est également connu que le boitier accessoire comporte deux arbres d'entrée distincts, ces deux arbres étant respectivement équipés d'une roue libre.

Cet agencement particulier permet alors que l'un des deux arbres d'entrée du boitier accessoire soit entrainé en rotation par une chaîne cinématique annexe du système mécanique quand la chaine cinématique principale n'est pas entraînée par le (ou les) moteur(s), ou quand la chaine cinématique principale transmet une vitesse de rotation plus élevée que celle transmise par la chaîne cinématique annexe.

Il est aussi plus précisément visé par la présente invention de proposer une solution qui prenne en compte l'entraînement en rotation de plusieurs rotors mobiles en rotation autour d'axes de rotation présentant respectivement chacun une orientation angulaire distincte les uns des autres. L'objet de l'invention est donc d'éviter les problèmes d'interférences entre les arbres aptes à entraîner en rotation différents rotors présentant des axes de rotation non parallèles entre eux.

Par ailleurs, il est également connu d'autres systèmes mécaniques de transmission utilisant des pignons coniques pour l'entraînement d'un rotor de queue tel que décrit dans le document US 2007/0125907 ou encore d'hélices propulsives et/ou d'un boitier accessoire tel que décrit par le Demandeur dans le document EP 3 144 222.

Cependant, de tels systèmes mécaniques sont très différents structurellement et ne permettent en aucun cas de répondre aux problèmes d'interférences entre les arbres aptes à entraîner en rotation différents rotors présentant des axes de rotation non parallèles entre eux.

L'invention concerne donc un système mécanique selon la revendication 1, en particulier un système mécanique de transmission d'un mouvement de rotation entre, d'une part au moins une roue d'entrée entraînée en rotation par au moins un moteur, chaque roue d'entrée étant entraînée en rotation par un moteur dédié correspondant, et d'autre part au moins deux arbres récepteurs distincts d'un boitier accessoire, le (ou les) moteur(s) permettant d'entraîner en rotation l'un des au moins deux arbres récepteurs isolément, ou simultanément les au moins deux arbres récepteurs conjointement avec au moins un rotor d'aéronef. Un tel système mécanique comporte par ailleurs un organe d'entraînement sélectif en rotation à manoeuvre axiale entre deux positions de motorisation distinctes :
- une première position de motorisation POS1 dans laquelle l'un des moteurs entraîne en rotation à la fois le (ou les) rotor(s) et un premier arbre récepteur du boitier accessoire, et,
- une seconde position de motorisation POS2 dans laquelle l'un des moteurs entraîne en rotation un second arbre récepteur du boitier accessoire, le second arbre récepteur étant distinct du premier arbre récepteur.

En outre, le système mécanique comporte également :
- un engrenage conique à axes concourants composé d'un premier pignon conique, dit "pignon de puissance", muni de dents, mobile en rotation autour d'un premier axe et d'une roue conique, munie de dents, mobile en rotation autour d'un deuxième axe, les dents respectives du premier pignon conique et de la roue conique coopérant de façon complémentaire les unes avec les autres, la roue conique entraînant en rotation le (ou les) rotor(s),
- un arbre dit "de dérivation" constamment entraîné en rotation par la roue d'entrée, l'arbre de dérivation permettant de transmettre constamment un mouvement de rotation au deuxième arbre récepteur du boitier accessoire sans entraîner en rotation l'engrenage conique et le pignon accessoire, dans la seconde position de motorisation POS2 de l'organe d'entraînement sélectif et lorsque le moteur entraîne en rotation la roue d'entrée correspondante, la roue d'entrée entraîne en rotation l'arbre de dérivation et le second arbre récepteur du boitier accessoire.

Selon l'invention un tel système mécanique est remarquable en ce qu'il comporte un deuxième pignon conique, dit "pignon accessoire", muni de dents engrenant avec les dents de la roue conique, ledit pignon accessoire transmettant un mouvement de rotation au premier arbre récepteur du boitier accessoire,
- , l'arbre de dérivation est par ailleurs agencé mobile en rotation autour d'un troisième axe de rotation distinct du premier axe de rotation, ce troisième axe de rotation étant agencé de manière non coaxiale avec le premier axe de rotation.

De plus, le système mécanique est remarquable en ce que dans la première position de motorisation POS1 de l'organe d'entraînement sélectif et lorsque le moteur entraîne en rotation la roue d'entrée correspondante, la roue d'entrée entraîne en rotation d'une part l'engrenage conique, le pignon accessoire et le premier arbre récepteur du boitier accessoire, et simultanément d'autre part, l'arbre de dérivation et le second arbre récepteur du boitier accessoire.

Autrement dit, l'utilisation d'un pignon accessoire directement entraîné en rotation par la roue conique permet d'éviter l'utilisation d'un arbre de transmission agencé coaxialement avec le pignon de puissance. Un tel pignon accessoire peut alors par exemple être agencé de manière radialement opposée au pignon de puissance permettant d'entraîner en rotation la roue conique.

De même, l'utilisation d'un arbre de dérivation qui peut être agencé de manière décalée et non coaxiale avec le premier axe de rotation permet de ne pas interférer avec un éventuel arbre de roue conique solidaire de la roue conique et entraîné en rotation par la roue conique et/ou entraînant en rotation cette roue conique, un tel arbre de roue conique étant alors agencé coaxialement avec le deuxième axe de rotation autour duquel la roue conique peut tourner.

En pratique, le troisième axe de rotation peut être agencé parallèlement et de façon non coplanaire avec un plan défini par les premier et deuxième axes de rotation concourants.

Ainsi, l'arbre de roue conique peut alors traverser la roue conique le long du deuxième axe de rotation et peut par exemple coopérer au niveau d'une première extrémité libre avec un système mécanique secondaire permettant d'entraîner en rotation un rotor de propulsion supplémentaire. Un tel système mécanique est alors particulièrement adapté pour transmettre un mouvement de rotation à au moins deux rotors distincts d'un giravion de type hybride.

Dans ce cas, le système mécanique permet de transmettre un mouvement de rotation entre un moteur de giravion hybride et un premier rotor principal formant une voilure tournante permettant de réaliser principalement la sustentation du giravion hybride et en partie sa propulsion. Un tel rotor principal est ainsi entraîné en rotation par la roue conique formant un premier pignon conique d'une pièce de liaison appelée par la suite "pignon double". Un tel pignon double comporte en effet un second pignon conique entraînant quant à lui en rotation une roue de conjugaison puis le rotor principal.

En parallèle, un tel système mécanique permet également de transmettre un mouvement de rotation entre le moteur du giravion hybride et au moins un second rotor de propulsion assurant en partie la propulsion du giravion hybride. Un tel second rotor de propulsion peut quant à lui être entraîné en rotation par un système mécanique secondaire coopérant avec l'arbre de roue conique agencé coaxialement avec la roue conique le long du deuxième axe de rotation, cet arbre de roue conique étant lui-même solidaire et entraîné en rotation par la roue conique. Comme déjà évoqué ci-dessus, un tel système mécanique secondaire permettant l'entraînement en rotation du second rotor de propulsion du giravion hybride peut être agencé au niveau d'une première extrémité libre de l'arbre de roue conique.

Avantageusement, l'organe d'entraînement sélectif peut être formé par une roue libre activable, cette roue libre activable comportant une pièce mobile actionnée par un actionneur choisi parmi le groupe comportant les actionneurs à commande hydraulique, les actionneurs à commande pneumatique et les actionneurs à commande électrique.

Alternativement, une telle pièce mobile de l'organe d'entraînement sélectif peut également être actionnée manuellement par un opérateur via notamment un levier et un jeu de biellettes ou de tringles pour permettre de transmettre un effort exercé manuellement sur le levier à un élément mobile interne de l'organe d'entraînement sélectif.

Cette pièce mobile peut notamment permettre d'indexer en rotation une cage à l'intérieur de la roue libre pour désactiver la roue libre.

Un tel organe d'entraînement sélectif a notamment été décrit plus en détail dans le document FR 2 670 553 et permet de commander un degré de mobilité en rotation ou au contraire de rendre solidaires deux arbres coaxiaux mobiles en rotation indépendamment ou non par rapport à leur axe de rotation commun.

En pratique, le système mécanique peut comporter des moyens d'adaptation pour adapter une vitesse de rotation de la roue d'entrée et pour entraîner en rotation l'arbre de dérivation et le second arbre récepteur du boitier accessoire.

De tels moyens d'adaptation d'une vitesse de rotation peuvent notamment se présenter sous la forme d'un engrenage ou d'un train d'engrenages. Ces moyens d'adaptation permettent en outre également de décaler radialement l'arbre de dérivation et le troisième axe de rotation par rapport l'axe de rotation de la roue d'entrée, appelé dans la suite de la demande sixième axe de rotation.

Par ailleurs, dans la première position de motorisation POS1 de l'organe d'entraînement sélectif et à un régime de rotation constant du (ou des) moteur(s), les moyens d'adaptation d'une vitesse peuvent permettre d'entraîner en rotation le second arbre récepteur du boitier accessoire à une vitesse de rotation Ω₂ distincte d'une vitesse de rotation Ω₁ du premier arbre récepteur du boitier accessoire.

Dans ce cas, des organes à différentiel de vitesse de rotation, tels que des roues libres notamment, peuvent être présents au niveau du boîtier accessoire pour automatiquement permettre l'entraînement des accessoires soit par le pignon de puissance, la roue conique et le pignon accessoire, soit par l'arbre de dérivation en fonction de l'écart de vitesses de rotation entre les premier et second arbres récepteurs.

Selon une autre caractéristique avantageuse de l'invention, les premier et second arbres récepteurs du boitier accessoire peuvent être mobiles en rotation respectivement autour d'un quatrième et d'un cinquième axes de rotation parallèles entre eux.

Un tel agencement permet en effet de considérablement simplifier la conception d'un tel boîtier accessoire. Le positionnement parallèle des quatrième et cinquième axes de rotation permet en effet de limiter le nombre, la masse et l'encombrement correspondant des moyens de transmission du mouvement de rotation à l'intérieur du boîtier accessoire.

Avantageusement, la roue d'entrée peut être mobile en rotation autour d'un sixième axe de rotation, les quatrième et cinquième axes de rotation étant agencés parallèlement avec le sixième axe de rotation.

Cet agencement particulier permet quant à lui de simplifier la conception du système mécanique de transmission d'un mouvement de rotation. Plus particulièrement, un tel agencement permet d'éviter l'utilisation d'engrenages coniques pour former les moyens d'adaptation. De tels moyens d'adaptation de vitesses peuvent alors être formés par des pignons présentant des surfaces primitives cylindriques à dentures droites ou hélicoïdales et des axes de rotation parallèles.

Par suite, la présente invention a aussi pour objet un aéronef comportant au moins un moteur et au moins un rotor pour réaliser une propulsion et/ou une sustentation de cet aéronef.

Selon l'invention cet aéronef est remarquable en ce qu'il comporte au moins un système mécanique tel que décrit précédemment, le système mécanique permettant de transmettre un mouvement de rotation entre un arbre moteur du (ou des) moteur(s) et un arbre récepteur du (ou des) rotor(s).

Comme déjà évoqué précédemment un tel aéronef peut notamment se présenter sous la forme d'un giravion ou encore plus particulièrement d'un giravion hybride.

L'invention et ses avantages apparaîtront avec plus de détails dans le cadre de la description qui suit avec des exemples donnés à titre illustratif en référence aux figures annexées qui représentent :
- la figure 1, une vue en perspective d'un aéronef équipé d'un système mécanique, conformément à l'invention, et
- les figures 2 et 3, des schémas de principe du fonctionnement selon un premier exemple de réalisation d'un système mécanique correspondant, illustré selon respectivement deux positions POS1 et POS2 de l'organe d'entraînement sélectif en rotation, conformément à l'invention,
- la figure 4 est une vue schématique de côté selon un second exemple de réalisation d'un système mécanique conforme à l'invention, et
- la figure 5 est une vue en perspective représentative du premier exemple de réalisation du système mécanique.

Les éléments présents dans plusieurs figures distinctes sont affectés d'une seule et même référence.

Comme déjà évoqué, l'invention se rapporte à un système mécanique et un aéronef équipé d'un tel système mécanique.

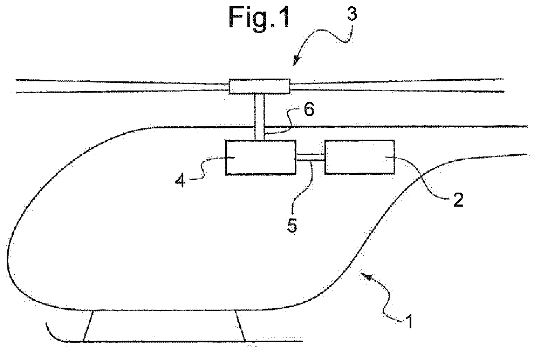

Tel que représenté à la figure 1, l'aéronef 1 peut se présenter sous la forme d'un giravion et comporter un moteur 2 tel un moteur à combustion ou encore un turboréacteur. Le moteur 2 permet alors d'entraîner en rotation un arbre moteur 5 et un système mécanique 4 permet de transmettre un mouvement de rotation de l'arbre moteur 5 à un arbre récepteur 6 avec une modification de l'orientation angulaire des axes de rotation respectifs des arbres moteur 5 et récepteur 6.

Un tel arbre récepteur 6 permet alors d'entraîner en rotation au moins un rotor 3 muni de pales pour permettre une sustentation et/ou une propulsion de l'aéronef 1. Avantageusement, le système mécanique 4 peut également permettre de réaliser une réduction de la vitesse de rotation de l'arbre récepteur 6 par rapport à la vitesse de rotation de l'arbre moteur 5.

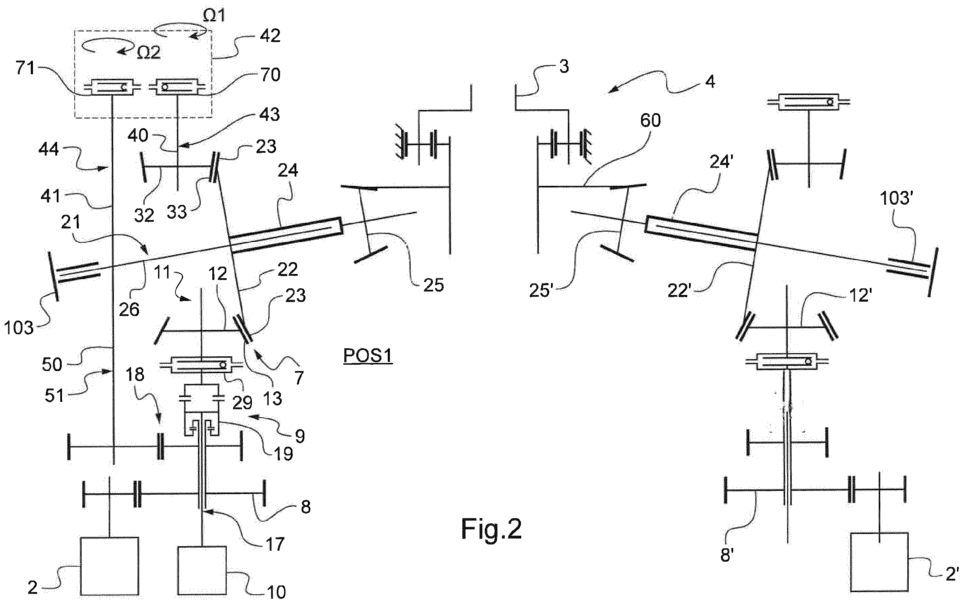

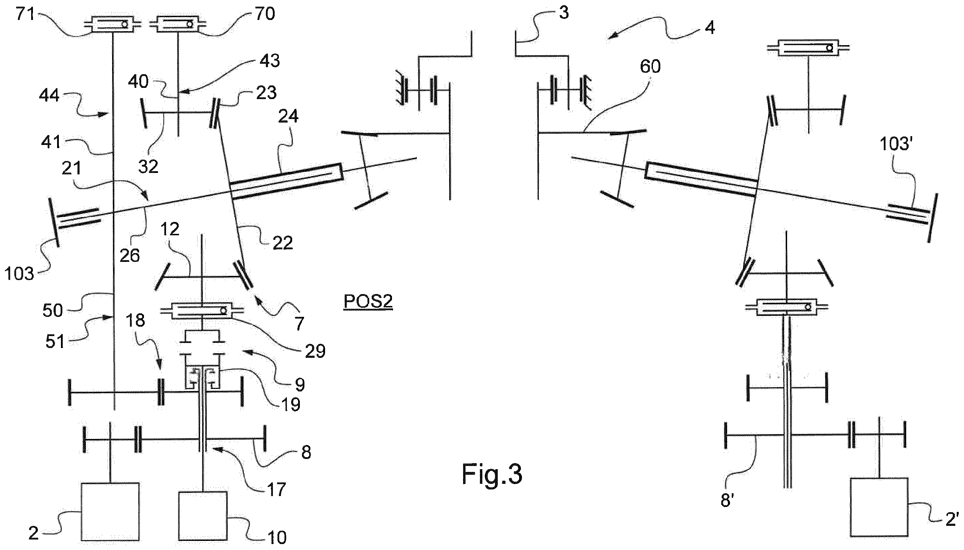

Telle que représentée schématiquement aux figures 2 et 3 et selon un premier exemple de réalisation d'un système mécanique 4, une pluralité d'arbres ou d'engrenages est mobile en rotation autour de différents axes de rotation. A des fins de simplification de représentation du système mécanique 4, certains axes sont ici représentés de manière coplanaire et peuvent se croiser ce qui n'est bien entendu pas possible physiquement.

Un tel système mécanique 4 de transmission d'un mouvement de rotation permet donc de transmettre un mouvement de rotation entre, d'une part au moins une roue d'entrée 8, 8' entraînée en rotation par au moins un moteur 2, 2', chaque roue d'entrée 8, 8' étant entraînée en rotation respectivement par l'un des moteurs 2, 2', et d'autre part au moins deux arbres récepteurs 40, 41 distincts d'un boitier accessoire 42. Dans ce premier exemple de réalisation, les au moins deux arbres récepteurs 40, 41 du boîtier accessoire 42 sont agencés parallèlement.

Le ou les moteurs 2, 2' permettent ainsi d'entraîner en rotation l'un au moins des deux arbres récepteurs 40, 41 isolément, ou simultanément les deux arbres récepteurs 40, 41 conjointement avec au moins un rotor 3, 103, 103' d'aéronef 1. Selon cet exemple de réalisation le rotor 3 peut être le rotor principal de propulsion et/ou de sustentation d'un giravion hybride et les deux rotors 103, 103' deux rotors de propulsion de ce giravion hybride.

Tel que représenté, un tel système mécanique 4 comporte également un organe 9 d'entraînement sélectif en rotation à manoeuvre axiale entre deux positions de motorisation distinctes :
- une première position de motorisation POS1, représentée à la figure 2, dans laquelle le moteur 2 entraîne en rotation à la fois les rotor(s) 3, 103, 103' et un premier arbre récepteur 40 du boitier accessoire 42, et
- une seconde position de motorisation POS2, représentée à la figure 3, dans laquelle le moteur 2 entraîne en rotation un second arbre récepteur 41 du boitier accessoire 42, le second arbre récepteur 41 étant distinct du premier arbre récepteur 40,

Par ailleurs, un tel système mécanique 4 comporte aussi un engrenage conique 7 à axes concourants 11 et 21 composé d'un premier pignon conique 12, dit "pignon de puissance", muni de dents 13, mobile en rotation autour d'un premier axe 11 et d'une roue conique 22 munie de dents 23, mobile en rotation autour d'un deuxième axe 21. Les dents 13 et 23 respectives du premier pignon conique 12 et de la roue conique 22 sont alors aptes à coopérer de façon complémentaire les unes avec les autres. La roue conique 22 est alors apte à entraîner en rotation les rotors 3, 103 et 103'.

En outre, le système mécanique 4 comporte un deuxième pignon conique 32 dit "pignon accessoire" muni de dents 33 engrenant avec les dents 23 de la roue conique 22. Un tel pignon accessoire 32 est par ailleurs apte à transmettre un mouvement de rotation au premier arbre récepteur 40 du boitier accessoire 42. En outre, la vitesse de rotation du premier arbre récepteur 40 peut être avantageusement distincte de celle du pignon conique 12 tout en conservant une orientation parallèle entre le premier axe 11 et un quatrième axe de rotation 43 autour duquel tourne le premier arbre récepteur 40.

Au surplus, le système mécanique 4 comporte aussi un arbre dit "de dérivation" 50 destiné à être constamment entraîné en rotation par la roue d'entrée 8. Un tel arbre de dérivation 50 permet alors de transmettre constamment un mouvement de rotation au second arbre récepteur 41 du boitier accessoire 42 sans entraîner en rotation l'engrenage conique 7 et le pignon accessoire 32. L'arbre de dérivation 50 est ici représenté mobile en rotation autour d'un troisième axe de rotation 51 distinct du premier axe de rotation 11.

De tels premier 40 et second arbres récepteurs 41 peuvent alors être agencés de manière à être libres en rotation respectivement autour d'un quatrième et d'un cinquième axes de rotation 43 et 44 parallèles entre eux mais non coaxiaux conformément au premier exemple de réalisation du système mécanique 4.

Un tel troisième axe de rotation 51 est alors agencé de manière non coaxiale avec le premier axe de rotation 11 ce qui évite tout problème d'interférence avec un arbre de roue conique 26. En effet, un tel agencement particulier permet alors de positionner ce troisième axe de rotation 51 parallèlement, et de façon non coplanaire, avec un plan défini par les premier et deuxième axes de rotation 11 et 21 concourants. Comme déjà évoqué précédemment, de façon erronée et à des fins de simplification de représentation, le troisième axe de rotation 51 est ici représenté de manière coplanaire avec les premier et deuxième axes de rotation 11 et 21 mais cela ne correspond pas à la réalité car le deuxième axe de rotation 21 et le troisième de rotation 51 ne peuvent pas être concourants.

En outre tel que représenté à la figure 2, lorsque l'organe 9 d'entraînement sélectif est agencé dans la première position de motorisation POS1, la roue d'entrée 8 entraîne alors en rotation d'une part l'engrenage conique 7, le pignon accessoire 32 et le premier arbre récepteur 40 du boitier accessoire 42, et simultanément d'autre part, l'arbre de dérivation 50 et le second arbre récepteur 41 du boitier accessoire 42.

Une telle première position de motorisation POS1 correspond alors à un état du giravion en vol puisqu'il permet d'entraîner en rotation le rotor principal 3 permettant de réaliser au moins la sustentation dans les airs du giravion.

Un actionneur 10 permet alors de commander l'organe 9 d'entraînement sélectif au moyen d'une tige maintenue dans une position prédéterminée. Cet actionneur peut quant à lui être commandé par exemple au moyen d'une commande hydraulique.

Par ailleurs, un tel organe 9 d'entraînement sélectif peut être avantageusement formé par une roue libre activable correspondant à une roue libre 29 activée ou non activée au moyen d'une pièce 19 mobile formant un moyen de crabotage/décrabotage entre la roue libre 29 et un pignon solidaire de la roue d'entrée 8.

Par ailleurs, la tige peut être agencée coaxialement avec la roue d'entrée 8 et permet ainsi de maintenir dans sa première position de motorisation POS1 l'organe 9 d'entraînement sélectif et plus particulièrement la pièce mobile 19. Une telle tige est alors agencée au niveau d'un sixième axe de rotation 17 de la roue d'entrée 8.

Un tel sixième axe de rotation 17 est alors avantageusement agencé parallèlement par rapport au quatrième et au cinquième axes de rotation 43 et 44.

Par ailleurs, le système mécanique 4 comporte des moyens d'adaptation 18, tels des engrenages à axes de rotation parallèles, pour réduire ou augmenter une vitesse de rotation de la roue d'entrée 8 et pour entraîner en rotation l'arbre de dérivation 50 et le second arbre récepteur 41 du boitier accessoire 42.

Par suite, lorsque l'organe 9 d'entraînement sélectif est placé dans la première position de motorisation POS1 et que le moteur 2 tourne à un régime de rotation constant, les moyens d'adaptation 18 peuvent alors permettre d'entraîner en rotation le second arbre récepteur 41 du boitier accessoire 42 à une vitesse de rotation Ω₂ distincte d'une vitesse de rotation Ω₁ du premier arbre récepteur 40 du boitier accessoire 42.

Par ailleurs des roues libres 70, 71 sont alors agencées dans le boîtier accessoire 42 et permettent alors de privilégier un entraînement en rotation des accessoires par le premier arbre récepteur 40 si celui-ci est entrainé par la roue conique 22.

Tel que représentée à la figure 3, lorsque l'organe 9 d'entraînement sélectif est agencé dans la seconde position de motorisation POS2, la roue d'entrée 8 entraîne alors en rotation l'arbre de dérivation 50 et le second arbre récepteur 41 du boitier accessoire 42 sans passer par l'engrenage conique 7, le pignon accessoire 32 et le premier arbre récepteur 40.

De manière schématique dans cette seconde position de motorisation POS2, l'actionneur 10 maintient alors la tige dans une position permettant d'éloigner la pièce 19 de la roue libre 29 et du pignon entraîné par la roue d'entrée 8. A des fins de simplification et compréhension, une telle pièce mobile 19 est ici représentée sous la forme d'une pièce externe à la roue libre 29 mais selon une autre variante une telle pièce mobile 19 peut également être agencée à l'intérieur de la roue libre pour permettre un déplacement et un maintient en position des billes ou des éléments roulants qu'elle comporte.

Une telle seconde position de motorisation POS2 correspond alors à un état au sol du giravion car le moteur 2 ne permet alors pas d'entraîner en rotation le rotor principal 3 du giravion.

Par ailleurs, la roue conique 22 peut former l'un des deux éléments engrenant d'un organe de transmission monolithique 24 appelé "pignon double". Un pignon 25 tourne ainsi de manière solidaire avec la roue conique 22 et coopère avec les dents d'une roue de conjugaison 60 apte à entraîner en rotation au moins un rotor principal 3.

Telle que représentée, une telle roue de conjugaison 60 peut également coopérer avec les dents d'un autre pignon 25' d'un second pignon double 24'.

Dans ce cas par analogie, un autre moteur 2' peut également permettre d'entraîner en rotation une autre roue d'entrée 8', un autre pignon de puissance 12' et une autre roue conique 22' complémentaire du second pignon double 24'.

Ainsi, un tel mode de réalisation particulier permet, lorsque l'organe 9 d'entraînement sélectif est agencé dans la première position de motorisation POS1, de pallier une éventuelle panne de l'un des deux moteurs 2, 2' pour permettre en vol de constamment entraîner en rotation le premier arbre récepteur 40 du boîtier d'accessoire 42 par l'un ou l'autre des deux moteurs 2, 2'.

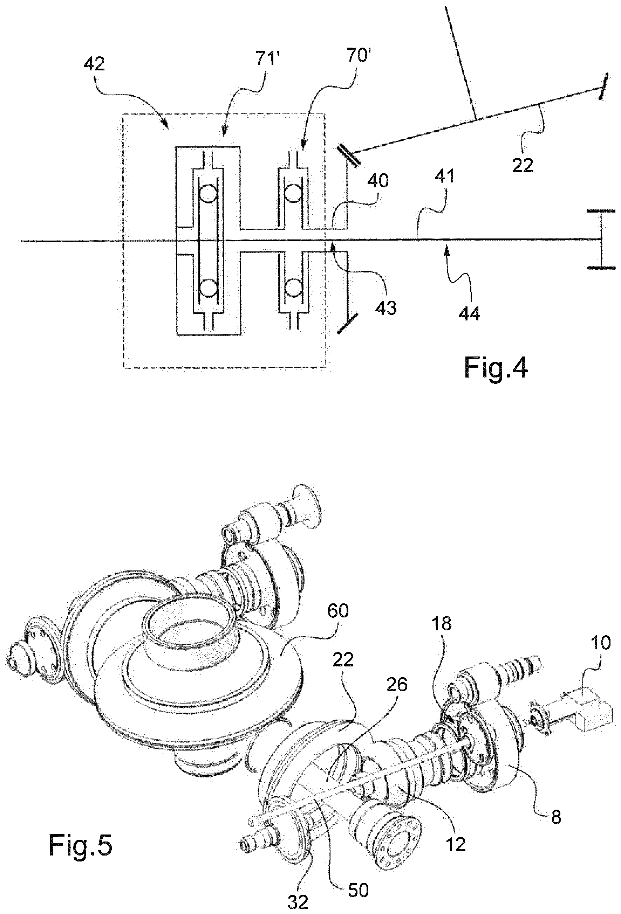

Selon un second exemple de réalisation du système mécanique 4 tel que représenté à la figure 4, les premier 40 et second arbres récepteurs 41 peuvent également être agencés de manière à être libres en rotation respectivement autour d'un quatrième et d'un cinquième axes de rotation 43 et 44 parallèles entre eux et coaxiaux.

Comme précédemment, des roues libres 70', 71' sont alors agencées dans le boîtier accessoire 42 et permettent alors de privilégier un entraînement en rotation des accessoires par le premier arbre récepteur 40 si celui-ci est entrainé par la roue conique 22.

Tel que représenté à la figure 5, l'arbre de dérivation 50 est représenté de manière décalé par rapport au sixième axe de rotation 17 de la roue d'entrée 8. Un tel décalage latéral de l'arbre de dérivation 50 permet de ne pas interférer avec l'arbre de roue conique 26 entraîné en rotation par la roue conique 22.

De plus, un tel décalage latéral de l'arbre de dérivation 50 est obtenu grâce aux moyens d'adaptation 18 permettant de réduire ou d'augmenter la vitesse de rotation de l'arbre de dérivation 50 par rapport à celle de la roue d'entrée 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système mécanique (4) de transmission d'un mouvement de rotation entre, d'une part au moins un moteur (2, 2') et d'autre part au moins deux arbres récepteurs (40, 41) distincts d'un boitier accessoire (42), ledit système mécanique (4) permettant à l'au moins un moteur (2, 2') d'entraîner en rotation l'un desdits au moins deux arbres récepteurs (40, 41) isolément, ou simultanément lesdits au moins deux arbres récepteurs (40, 41) conjointement avec au moins un rotor (3, 103, 103') d'aéronef (1), ledit système mécanique (4) comportant au moins une roue d'entrée (8, 8') agencée pour être entraînée en rotation par le au moins un moteur (2, 2'), chaque roue d'entrée (8, 8') étant agencée pour être entraînée en rotation par un moteur (2, 2') dédié correspondant, et un organe (9)
d'entraînement sélectif en rotation à manoeuvre axiale entre deux positions de motorisation distinctes :
• une première position de motorisation (POS1) dans laquelle l'un desdits au moins un moteur (2) entraîne en rotation à la fois ledit au moins un rotor (3, 103, 103') et un premier arbre récepteur (40) dudit boitier accessoire (42), et,
• une seconde position de motorisation (POS2) dans laquelle l'un desdits au moins un moteur (2) entraîne en rotation un second arbre récepteur (41) dudit boitier accessoire (42), ledit second arbre récepteur (41) étant distinct dudit premier arbre récepteur (40),
ledit système mécanique (4) comportant en outre :
• un engrenage conique (7) à axes concourants (11) et (21) composé d'un premier pignon conique (12), dit "pignon de puissance", muni de dents (13), mobile en rotation autour d'un premier axe (11) et d'une roue conique (22) munie de dents (23), mobile en rotation autour d'un deuxième axe (21), lesdites dents (13) et (23) respectives dudit premier pignon conique (12) et de ladite roue conique (22) coopérant de façon complémentaire les unes avec les autres, ladite roue conique (22) étant agencée pour entraîner en rotation ledit au moins un rotor (3, 103, 103'),
• un arbre dit "de dérivation" (50) constamment entraîné en rotation par ladite au moins une roue d'entrée (8), ledit arbre de dérivation (50) permettant de transmettre constamment un mouvement de rotation audit deuxième arbre récepteur (41) dudit boitier accessoire (42) sans entraîner en rotation ledit engrenage conique (7) et le pignon accessoire (32), dans ladite seconde position de motorisation (POS2) dudit organe (9) d'entraînement sélectif et lorsque ledit moteur (2) entraîne en rotation ladite au moins une roue d'entrée (8) correspondante, ladite roue d'entrée (8) entraîne en rotation ledit arbre de dérivation (50) et ledit second arbre récepteur (41) dudit boitier accessoire (42),
**caractérisé en ce que** ledit système mécanique (4) comporte un deuxième pignon conique (32) dit "pignon accessoire" muni de dents (33) engrenant avec les dents (23) de ladite roue conique (22), ledit pignon accessoire (32) étant agencé pour transmettre un mouvement de rotation audit premier arbre récepteur (40) dudit boitier accessoire (42), ledit arbre de dérivation (50) étant mobile en rotation autour d'un troisième axe de rotation (51) distinct du premier axe de rotation (11), ledit troisième axe de rotation (51) étant agencé de manière non coaxiale avec ledit premier axe de rotation (11),
et **en ce que** dans ladite première position de motorisation (POS1) dudit organe (9) d'entraînement sélectif et lorsque ledit moteur (2) entraîne en rotation ladite au moins une roue d'entrée (8) correspondante, ladite au moins une roue d'entrée (8) entraîne en rotation d'une part ledit engrenage conique (7), ledit pignon accessoire (32) et ledit premier arbre récepteur (40) dudit boitier accessoire (42), et simultanément d'autre part, ledit arbre de dérivation (50) et ledit second arbre récepteur (41) dudit boitier accessoire (42).

2. Système mécanique selon la revendication 1,
**caractérisé en ce que** ledit troisième axe de rotation (51) est agencé parallèlement et de façon non coplanaire avec un plan défini par lesdits premier et deuxième axes de rotation (11) et (21) concourants.

3. Système mécanique selon l'une quelconque des revendications 1 à 2,
**caractérisé en ce que** ledit organe (9) d'entraînement sélectif est formé par une roue libre (29) activable, ladite roue libre (29) activable comportant une pièce mobile (19) actionnée par un actionneur (10) choisi parmi le groupe comportant les actionneurs à commande hydraulique, les actionneurs à commande pneumatique et les actionneurs à commande électrique.

4. Système mécanique selon l'une quelconque des revendications 1 à 3,
**caractérisé en ce que** ledit système mécanique (4) comporte des moyens d'adaptation (18) pour adapter une vitesse de rotation de ladite roue d'entrée (8) et pour entraîner en rotation ledit arbre de dérivation (50) et ledit second arbre récepteur (41) dudit boitier accessoire (42).

5. Système mécanique selon la revendication 4,
**caractérisé en ce que**, dans ladite première position de motorisation (POS1) dudit organe (9) d'entraînement sélectif et à un régime de rotation constant dudit au moins un moteur (2, 2'), lesdits moyens d'adaptation (18) permettent d'entraîner en rotation ledit second arbre récepteur (41) dudit boitier accessoire (42) à une vitesse de rotation Ω₂ distincte d'une vitesse de rotation Ω₁ dudit premier arbre récepteur (40) dudit boitier accessoire (42).

6. Système mécanique selon l'une quelconque des revendications 1 à 5,
**caractérisé en ce que** lesdits premier (40) et second arbres récepteurs (41) dudit boitier accessoire (42) sont mobiles en rotation respectivement autour d'un quatrième et d'un cinquième axes de rotation (43) et (44) parallèles entre eux.

7. Système mécanique selon la revendication 6
**caractérisé en ce que** ladite roue d'entrée (8) est mobile en rotation autour d'un sixième axe de rotation (17), lesdits quatrième et cinquième axes de rotation (43) et (44) étant agencés parallèlement avec ledit sixième axe de rotation (17).

8. Aéronef (1) comportant au moins un moteur (2, 2') et au moins un rotor (3, 103, 103') pour réaliser une propulsion et/ou une sustentation dudit aéronef (1),
**caractérisé en ce que** ledit aéronef (1) comporte au moins un système mécanique (4) selon l'une quelconque des revendications 1 à 7, ledit système mécanique (4) permettant de transmettre un mouvement de rotation entre un arbre moteur (5) dudit au moins un moteur (2) et un arbre récepteur (6) dudit au moins un rotor (3, 103, 103').

## Patentansprüche

1. Mechanisches System (4) zum Übertragen einer Drehbewegung zwischen einerseits mindestens einem Motor (2, 2') und andererseits mindestens zwei verschiedenen Aufnahmewellen (40, 41) eines Nebengetriebes (42), wobei das mechanische System (4) es dem mindestens einen Motor (2, 2') ermöglicht, zusammen mit einem Flugzeugrotor (3, 103, 103') eine der mindestens zwei Aufnahmewellen (40, 41) allein oder die mindestens zwei Aufnahmewellen (40, 41) gleichzeitig drehanzutreiben, wobei das mechanische System (4) mindestens ein Eingangsrad (8, 8'), das angeordnet ist, um von dem mindestens einen Motor (2, 2') drehangetrieben zu werden, wobei jedes Eingangsrad (8, 8') angeordnet ist, um von einem entsprechenden speziellen Motor (2, 2') drehangetrieben zu werden, und ein selektives Drehantriebselement (9) umfasst, das zwischen zwei verschiedenen Antriebspositionen axial verstellbar ist:
- einer ersten Antriebsposition (POS1), in der einer der mindestens einen Motoren (2) sowohl den mindestens einen Rotor (3, 103, 103') als auch eine erste Aufnahmewelle (40) des Nebengetriebes (42) drehantreibt, und
- einer zweiten Antriebsposition (POS2), in der einer der mindestens einen Motoren (2) eine zweite Aufnahmewelle (41) des Nebengetriebes (42) drehantreibt, wobei die zweite Aufnahmewelle (41) von der ersten Aufnahmewelle (40) verschieden ist,
wobei das mechanische System (4) ferner umfasst
- ein Kegelgetriebe (7) mit zusammenlaufenden Achsen (11) und (21), das aus einem ersten Kegelritzel (12), als "Leistungsritzel" bezeichnet, das mit Zähnen (13) versehen und um eine erste Achse (11) drehbar ist, und einem Kegelrad (22), das mit Zähnen (23) versehen und um eine zweite Achse (21) drehbar ist, besteht, wobei die jeweiligen Zähne (13) und (23) des ersten Kegelritzels (12) und des Kegelrades (22) komplementär miteinander zusammenwirken und das Kegelrad (22) angeordnet ist, um den mindestens einen Rotor (3, 103, 103') drehanzutreiben,
- eine sogenannte "Nebenwelle" (50), die von dem mindestens einen Eingangsrad (8) ständig drehangetrieben ist, wobei die Bypasswelle (50) es ermöglicht, eine Drehbewegung ständig auf die zweite Aufnahmewelle (41) des Nebengetriebes (42) zu übertragen, ohne das Kegelgetriebe (7) und das Hilfsritzel (32) drehanzutreiben, wobei in der zweiten Antriebsposition (POS2) des selektiven Antriebselements (9) und wenn der Motor (2) das entsprechende mindestens eine Eingangsrad (8) drehantreibt, das Eingangsrad (8) die Bypasswelle (50) und die zweite Aufnahmewelle (41) des Nebengetriebes (42) drehantreibt,
**dadurch gekennzeichnet, dass** das mechanische System (4) ein zweites Kegelritzel (32) beinhaltet, das als "Nebenritzel" bezeichnet wird und mit Zähnen (33) versehen ist, die mit den Zähnen (23) des Kegelrades (22) in Eingriff stehen, wobei das Nebenritzel (32) angeordnet ist, um eine Drehbewegung auf die erste Aufnahmewelle (40) des Nebengetriebes (42) zu übertragen, die Bypasswelle (50) um eine dritte Drehachse (51) drehbar ist, die sich von der ersten Drehachse (11) unterscheidet, wobei die dritte Drehachse (51) nicht-koaxial mit der ersten Drehachse (11) angeordnet ist,
und dass in der ersten Antriebsposition (POS1) des selektiven Antriebselements (9) und wenn der Motor (2) das entsprechende mindestens eine Eingangsrad (8) drehantreibt, das mindestens eine Eingangsrad (8) einerseits das Kegelgetriebe (7), das Nebenritzel (32) und die erste Aufnahmewelle (40) des Nebengehäuses (42) und gleichzeitig andererseits die Nebenwelle (50) und die zweite Aufnahmewelle (41) des Nebengetriebes (42) drehantreibt.

2. Mechanisches System nach Anspruch 1,
**dadurch gekennzeichnet, dass** die dritte Drehachse (51) parallel und nicht-koplanar zu einer Ebene angeordnet ist, die durch die erste und zweite gleichzeitige Drehachse (11) und (21) definiert ist.

3. Mechanisches System nach einem der Ansprüche 1 bis 2,
**dadurch gekennzeichnet, dass** das selektive Antriebselement (9) durch einen aktivierbaren Freilauf (29) gebildet ist, wobei der aktivierbare Freilauf (29) einen beweglichen Teil (19) beinhaltet, der durch ein Stellglied (10) betätigt wird, das ausgewählt ist aus der Gruppe bestehend aus hydraulisch gesteuerten Stellgliedern, pneumatisch gesteuerten Stellgliedern und elektrisch gesteuerten Stellgliedern.

4. Mechanisches System nach einem der Ansprüche 1 bis 3,
**dadurch gekennzeichnet, dass** das mechanische System (4) Anpassungsmittel (18) zum Anpassen einer Drehzahl des Eingangsrades (8) und zum Drehantreiben der Bypasswelle (50) und der zweiten Aufnahmewelle (41) des Nebengetriebes (42) umfasst.

5. Mechanisches System nach Anspruch 4,
**dadurch gekennzeichnet, dass** in der ersten Antriebsposition (POS1) des selektiven Antriebselements (9) und bei Betrieb des mindestens einen Motors (2, 2') mit konstanter Drehzahl die Anpassungsmittel (18) es ermöglichen, die zweite Aufnahmewelle (41) des Zubehörmantels (42) mit einer Drehzahl Ω₂ zu drehen, die sich von einer Drehzahl Ω₁ der ersten Aufnahmewelle (40) des Nebengetriebes (42) unterscheidet.

6. Mechanisches System nach einem der Ansprüche 1 bis 5,
**dadurch gekennzeichnet, dass** die erste (40) und zweite Aufnahmewelle (41) des Hilfsgehäuses (42) um jeweils eine vierte und eine fünfte Drehachse (43) und (44) drehbar sind, die zueinander parallel sind.

7. Mechanisches System nach Anspruch 6,
**dadurch gekennzeichnet, dass** das Eingangsrad (8) um eine sechste Drehachse (17) drehbar ist, und dass die vierte und fünfte Drehachse (43) und (44) parallel zur sechsten Drehachse (17) angeordnet sind.

8. Flugzeug (1), das mindestens einen Motor (2, 2') und mindestens einen Rotor (3, 103, 103, 103') zum Bewirken des Vortriebs und/oder des Anhebens des Flugzeugs (1) umfasst, **dadurch gekennzeichnet, dass** das Flugzeug (1) mindestens ein mechanisches System (4) nach einem der Ansprüche 1 bis 7 umfasst, wobei das mechanische System (4) es ermöglicht, eine Drehbewegung zwischen einer Abtriebswelle (5) des mindestens einen Motors (2) und einer Aufnahmewelle (6) des mindestens einen Rotors (3, 103, 103) zu übertragen.

## Claims

1. Mechanical system (4) for transmitting rotary motion between at least one engine (2, 2') and at least two separate driven shafts (40, 41) of an accessory gear box (42), said mechanical system (4) allowing the at least one engine (2, 2') to rotate one of said at least two driven shafts (40, 41) in isolation, or to simultaneously rotate said at least two driven shafts (40, 41) together with at least one rotor (3, 103, 103') of an aircraft (1), said mechanical system (4) comprising at least one input wheel (8, 8') arranged to be rotated by the at least one engine (2, 2'), each input wheel (8, 8') being arranged to be rotated by a corresponding dedicated engine (2, 2'), and comprising a selective rotary drive member (9) that is axially movable between two separate drive positions:
• a first drive position (POS1) in which one of said engines (2), of which there is at least one, rotates both said at least one rotor (3, 103, 103') and a first driven shaft (40) of said accessory gear box (42), and
• a second drive position (POS2) in which one of said engines (2), of which there is at least one, rotates a second driven shaft (41) of said accessory gear box (42), said second driven shaft (41) being separate from said first driven shaft (40),
said mechanical system (4) further comprising:
• a bevel gear pair (7) having intersecting axes (11) and (21), made up of a first bevel gear (12), referred to as a "power gear", that is provided with teeth (13) and is rotatably movable about a first axis (11), and of a bevel wheel (22) that is provided with teeth (23) and is rotatably movable about a second axis (21), said respective teeth (13) and (23) of said first bevel gear (12) and said bevel wheel (22) interacting with one another in a complementary manner, said bevel wheel (22) being arranged to rotate said at least one rotor (3, 103, 103'),
• a "take-off" shaft (50) that is constantly rotated by said at least one input wheel (8), said take-off shaft (50) allowing rotary motion to be constantly transmitted to said second driven shaft (41) of said accessory gear box (42) without rotating said bevel gear pair (7) and the accessory gear (32), in said second drive position (POS2) of said selective drive member (9) and when said engine (2) rotates said at least one corresponding input wheel (8), said input wheel (8) rotates said take-off shaft (50) and said second driven shaft (41) of said accessory gear box (42),
**characterised in that** said mechanical system (4) comprises a second bevel gear (32), referred to as an "accessory gear", that is provided with teeth (33) that mesh with the teeth (23) of said bevel wheel (22), said accessory gear (32) being arranged to transmit rotary motion to said first driven shaft (40) of said accessory gear box (42), said take-off shaft (50) being rotatably movable about a third axis of rotation (51) that is separate from the first axis of rotation (11), said third axis of rotation (51) being arranged such that it is not coaxial with said first axis of rotation (11),
and **in that** in said first drive position (POS1) of said selective drive member (9) and when said engine (2) rotates said at least one corresponding input wheel (8), said at least one input wheel (8) rotates said bevel gear pair (7), said accessory gear (32) and said first driven shaft (40) of said accessory gear box (42) and simultaneously rotates said take-off shaft (50) and said second driven shaft (41) of said accessory gear box (42).

2. Mechanical system according to claim 1, **characterised in that** said third axis of rotation (51) is arranged in parallel with and in a non-coplanar manner with a plane defined by said first and second intersecting axes of rotation (11) and (21).

3. Mechanical system according to either claim 1 or claim 2, **characterised in that** said selective drive member (9) is formed by an activatable freewheel (29), said activatable freewheel (29) comprising a movable part (19) actuated by an actuator (10) selected from the group comprising hydraulically controlled actuators, pneumatically controlled actuators and electrically controlled actuators.

4. Mechanical system according to any of claims 1 to 3, **characterised in that** said mechanical system (4) comprises adaptation means (18) for adapting a speed of rotation of said input wheel (8) and for rotating said take-off shaft (50) and said second driven shaft (41) of said accessory gear box (42).

5. Mechanical system according to claim 4, **characterised in that**, in said first drive position (POS1) of said selective drive member (9) and at constant speed of rotation of said at least one engine (2, 2'), said adaptation means (18) allow said second driven shaft (41) of said accessory gear box (42) to be rotated at a speed of rotation Ω₂ that is different from a speed of rotation Ω₁ of said first driven shaft (40) of said accessory gear box (42).

6. Mechanical system according to any of claims 1 to 5, **characterised in that** said first (40) and second (41) driven shafts of said accessory gear box (42) are rotatably movable about a fourth and a fifth axis of rotation (43) and (44), which are mutually parallel.

7. Mechanical system according to claim 6, **characterised in that** said input wheel (8) is rotatably movable about a sixth axis of rotation (17), said fourth and fifth axes of rotation (43) and (44) being arranged in parallel with said sixth axis of rotation (17).

8. Aircraft (1) comprising at least one engine (2, 2') and at least one rotor (3, 103, 103') for providing said aircraft (1) with propulsion and/or lift,
**characterised in that** said aircraft (1) comprises at least one mechanical system (4) according to any of claims 1 to 7, said mechanical system (4) allowing rotary motion to be transmitted between a drive shaft (5) of said at least one engine (2) and a driven shaft (6) of said at least one rotor (3, 103, 103').
